# FASCICULE DE BREVET EUROPEEN

(11) **EP 2 374 635 B1**
(45) Date de publication et mention de la délivrance du brevet: **09.01.2013**
(21) Numéro de dépôt: 11161505.0
(22) Date de dépôt: 07.04.2011
(51) Int. Cl.: B60B 35/10, B62D 49/06, B66F 11/04, B60G 3/04

(54) **Système d'essieu, module d'essieu comprenant au moins un tel système d'essieu et véhicule comprenant au moins un tel module**
Achssystem, Achsmodul, das mindestens ein solches Achssytem umfasst und Fahrzeug, das mindestens ein solches Modul umfasst
Axle system, axle module including at least one such axle system, and vehicle including at least one such module

(30) Priorité: 09.04.2010 FR 1052706
(43) Date de publication de la demande: 12.10.2011
(73) Titulaire: Haulotte Group, 42152 L'Horme (FR)
(72) Inventeur: Beji, Slaheddine, 38200, VIENNE (FR)
(74) Mandataire: Myon, Gérard Jean-Pierre

(56) Documents cités:
- WO-A1-2005/056308
- US-A- 5 489 114

## Description

L'invention concerne un système d'essieu extensible et rétractable. L'invention concerne également un module d'essieu comprenant au moins un tel système d'essieu. L'invention concerne enfin un véhicule, notamment de type nacelle élévatrice, comprenant au moins un tel module d'essieu, de préférence un module d'essieu avant et un module d'essieu arrière.

Le domaine de l'invention est celui des véhicules et engins de levage, notamment les nacelles élévatrices de personnel. De manière classique, une nacelle élévatrice de personnel comprend un châssis motorisé, une tourelle pivotant à 360° sur le châssis, un mât télescopique articulé sur la tourelle, et une plate-forme mobile agencée à l'extrémité du mât télescopique. Il est souhaitable qu'une telle nacelle puisse circuler facilement dans un passage étroit, et également pénétrer dans un conteneur pour son chargement ou déchargement. Avantageusement, la longueur et la largeur de la nacelle doivent donc être réduites, tout en conservant des performances de levage élevées.

Par ailleurs, la Directive Machines 2006/42/CE, ainsi que la norme NF EN 280 relative aux plates-formes élévatrices mobiles de personnel, définissent les impératifs de sécurité applicables à une telle nacelle. La stabilité est un critère essentiel, car il existe un risque de basculement de la nacelle lors de son utilisation, par exemple lors d'un excès d'inclinaison du mât télescopique. Un tel basculement doit être impérativement évité, notamment lorsque des personnes se trouvent sur la plate-forme mobile située en hauteur. Lors d'une rotation à 360°, la stabilité de la nacelle varie en fonction de la position de la tourelle et des autres éléments mobiles : mât d'élévation, plate-forme et ses occupants. La stabilité de la nacelle doit être constante ou varier peu, quelle que soit la position en rotation de la tourelle et des autres éléments mobiles.

En pratique, la stabilité de la nacelle augmente lorsqu'augmente l'écartement entre les points d'appui au sol de la nacelle, à savoir les roues équipant le châssis moteur. L'espacement entre les roues avant d'une part et les roues arrière d'autre part, considéré dans le sens de la longueur de la nacelle, est appelé « empattement ». L'espacement entre les roues avant, ou entre les roues arrières, considéré dans le sens de la largeur, est appelé « voie ». De manière classique, comme la largeur de la nacelle est inférieure à sa longueur, la voie est inférieure à l'empattement. Pour améliorer la stabilité, on cherche donc de préférence à augmenter la voie de la nacelle. Cependant, si l'augmentation de la voie et de l'empattement permet d'améliorer la stabilité, cela augmente dans le même temps l'encombrement de la nacelle, ce qui n'est pas satisfaisant. Ainsi, il est nécessaire de trouver un compromis entre deux paramètres critiques et contradictoires : la stabilité et l'encombrement de la nacelle.

A cet effet, de manière connue, une nacelle élévatrice peut être équipée d'essieux extensibles et rétractables. Par exemple, chaque essieu est disposé dans un caisson et mu par un vérin. Les caissons peuvent être alignés, imbriqués ou décalés. Lorsque les essieux sont rétractés, notamment lors du déplacement de la nacelle, l'encombrement de la nacelle en largeur est réduit. Lorsque les essieux sont étendus, notamment en position de travail, la stabilité est améliorée. Avantageusement, on cherche à optimiser le rapport entre la longueur des essieux sortis par la longueur des essieux rentrés, autrement dit le rapport d'extension de la voie, qui doit être le plus élevé possible.

US-A-6 119 882 décrit une nacelle, avec des essieux extensibles et rétractables qui sont alignés. A l'avant comme à l'arrière, les caissons des essieux sont disposés face à face. Par conséquent, le rapport d'extension de la voie est limité, ce qui n'est pas satisfaisant.

US-B-6 827 176 décrit un véhicule, notamment un véhicule industriel de type nacelle, avec des essieux extensibles et rétractables qui sont décalés. Chaque ensemble d'essieu inclut un axe extensible et rétractable supportant une roue avec direction indépendante et un mécanisme de direction. Chaque axe extensible comprend un élément d'axe télescopique supporté en extension/rétractation par un cadre. Un vérin hydraulique ou un appareil d'entraînement similaire est fixé au cadre et un bras d'extension est fixé sur l'élément d'axe télescopique. Chaque roue peut être orientée de manière indépendante à l'aide du mécanisme de direction, mais seulement dans un plan horizontal sensiblement parallèle au sol, ce qui n'est pas satisfaisant.

Un système d'essieu comportant les caractéristiques du préambule de la revendication 1 est connu de WO-A-2005/056308.

Le but de la présente invention est de proposer un système d'essieu extensible qui est peu encombrant et fournit une stabilité améliorée de la nacelle.

A cet effet, l'invention a pour objet un système d'essieu comprenant une roue mobile en rotation autour d'un axe de rotation, et au moins :
- un bras de support qui supporte la roue à une première extrémité du bras et qui est mobile en rotation autour d'un premier axe d'une articulation agencée à une deuxième extrémité du bras,
- au moins quatre articulations qui définissent les quatre sommets d'un quadrilatère agencé dans un plan perpendiculaire au premier axe, et
- un sous-système d'extension/rétractation incluant des moyens d'extension et de rétractation de la roue, les moyens d'extension et de rétractation étant aptes à déformer le quadrilatère dans le plan en déplaçant la roue et le bras de support selon un mouvement de translation circulaire perpendiculaire au premier axe.

Ce système d'essieu est caractérisé en ce qu'il comprend également un sous-système d'oscillation incluant des moyens d'oscillation de la roue, les moyens d'oscillation étant aptes à déformer le quadrilatère dans le plan en déplaçant la roue et le bras de support selon un mouvement de rotation autour du premier axe.

Ainsi, l'invention permet d'améliorer le rapport d'extension de la voie de la nacelle, et donc obtenir un bon compromis entre stabilité et encombrement.

Selon d'autres caractéristiques avantageuses de l'invention, prises isolément ou en combinaison :
- les moyens d'extension et de rétractation comprennent un premier vérin, les moyens d'oscillation comprennent un deuxième vérin, et le premier vérin du sous-système d'extension/rétractation et le deuxième vérin du sous-système d'oscillation sont actionnés indépendamment l'un de l'autre et chacun est apte à déformer le quadrilatère dans le plan ;
- le système comprend un sous-système de motorisation incluant des moyens de transmission aptes à transmettre à la roue un couple d'entraînement en rotation autour de son axe de rotation ;
- le système comprend un sous-système de direction incluant des moyens d'orientation de l'axe de rotation de la roue en rotation autour d'un deuxième axe perpendiculaire au premier axe, avec une articulation agencée à la première extrémité du bras support, apte à réaliser une liaison pivot autour du deuxième axe entre la roue et le bras support, et un vérin agencé entre le bras support et la roue ;
- les moyens d'extension et de rétractation du sous-système d'extension/rétractation incluent un vérin apte à déformer le quadrilatère dans ledit plan, avec deux articulations fixes qui définissent un segment fixe perpendiculaire au premier axe,
- et deux articulations mobiles lorsque le vérin est actionné, qui définissent un segment mobile suivant un mouvement de translation circulaire perpendiculaire au premier axe ;
- les moyens d'oscillation du sous-système d'oscillation incluent un vérin apte à déformer le quadrilatère dans ledit plan, avec deux articulations fixes qui définissent un segment fixe perpendiculaire au premier axe, deux articulations qui définissent un segment déformable dont la longueur est variable lorsque le vérin est actionné, et deux articulations qui définissent un segment oscillant mobile en rotation autour du premier axe lorsque la longueur du segment déformable varie ;
- les moyens d'oscillation incluent une première articulation fixe agencée à une première extrémité d'un premier bras, une deuxième articulation mobile agencée à une première extrémité d'un deuxième bras, une troisième articulation agencée entre une deuxième extrémité du premier bras et une deuxième extrémité du deuxième bras, et le vérin est positionné entre une quatrième articulation agencée sur le premier bras et une cinquième articulation agencée sur le deuxième bras, de manière que lorsque le vérin est actionné, le premier bras et le deuxième bras pivotent l'un par rapport à l'autre au niveau de la troisième articulation et la longueur du segment déformable, compris entre les première et deuxième articulations, varie ;

L'invention a également pour objet un module d'essieu comprenant deux systèmes d'essieu tel que mentionnés ci-dessus.

Les roues et les bras de support des systèmes d'essieu de ce module sont avantageusement mobiles en extension, rétractation et/ou oscillation dans des plans sensiblement parallèles entre eux.

On peut prévoir que les roues et les bras de support des systèmes d'essieu respectifs sont mobiles en extension, rétractation et/ou oscillation dans un même plan.

L'invention a également pour objet un véhicule, notamment de type nacelle élévatrice, comprenant au moins un châssis et au moins un module d'essieu tel que mentionné ci-dessus, avec notamment un module avant disposé à l'avant du châssis et/ou un module arrière disposé à l'arrière du châssis.

L'invention sera mieux comprise à la lecture de la description qui va suivre, donnée uniquement à titre d'exemple non limitatif et faite en référence aux dessins sur lesquels :
- la figure 1 est une vue en élévation d'une nacelle élévatrice conforme à l'invention ;
- la figure 2 est une vue de dessus de la nacelle de la figure 1 ;
- la figure 3 est une vue partielle de dessous de la nacelle de la figure 1, montrant son module d'essieu arrière ;
- la figure 4 est une vue en perspective du module d'essieu arrière de la figure 3;
- la figure 5 est une vue en élévation d'un système d'essieu conforme à l'invention et appartenant au module d'essieu des figures 3 et 4, vu dans le sens de la flèche V à la figure 4 ;
- la figure 6 est une vue de dessus du système d'essieu de la figure 5 à plus petite échelle ;
- la figure 7 est une vue en perspective du système d'essieu des figures 5 et 6 ;
- la figure 8 est une vue en élévation par l'arrière du module d'essieu arrière des figures 3 et 4 en position rétractée ;
- la figure 9 est une vue en élévation analogue à la figure 8 du module d'essieu arrière en position étendue ; et
- la figure 10 est une vue en élévation analogue aux figures 8 et 9 du module d'essieu arrière en position étendue et oscillante.

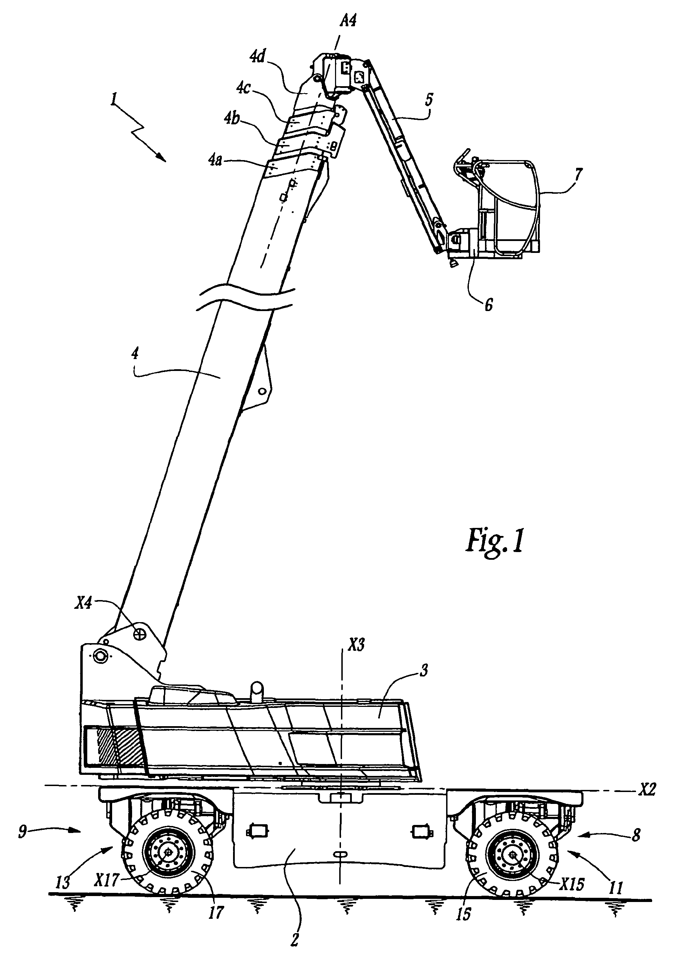

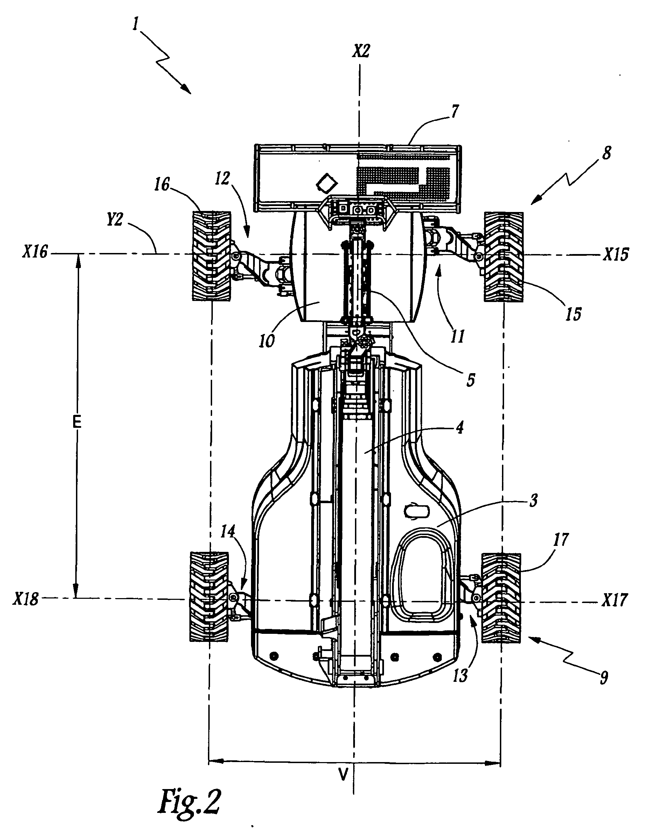

Sur les figures 1 et 2 est représenté un véhicule, de type nacelle élévatrice de personnel, conforme à l'invention.

La nacelle 1 comprend un châssis 2, qui est motorisé et muni de deux modules d'essieu, respectivement arrière 8 et avant 9. On note X2 l'axe longitudinal central du châssis 2. Les moyens de motorisation du châssis 2, non représentés, peuvent comprendre un moteur à combustion interne ou un moteur électrique. Sur le châssis 2 peuvent également être montés un réservoir hydraulique, un réservoir de carburant, et/ou un ensemble de batteries électriques.

Sur le châssis 2 est agencée une tourelle 3, apte à tourner sur 360° autour d'un axe de rotation vertical X3. De préférence, la tourelle 3 est actionnée par des moyens hydrauliques, non représentés. Un mât télescopique 4 est articulé sur la tourelle 3 autour d'un axe X4 perpendiculaire à l'axe X3. Le mât 4 comprend plusieurs profilés allongés 4a, 4b, 4c et 4d, emboîtés les uns dans les autres selon une direction longitudinale d'axe A4 perpendiculaire à l'axe X4. Le fonctionnement du mât télescopique 4 est connu en soi. En variante, le mât 4 peut être un mât d'élévation articulé ou de tout type connu.

A l'extrémité 4d du mât 4 est agencée une structure à parallélogramme 5, supportant une plate-forme 6. La plate-forme 6 supporte un panier 7 prévu pour recevoir une charge, notamment du personnel et de l'équipement. La valeur de la charge admissible dépend des dimensions et de la résistance mécanique des différents éléments de la nacelle 1. En fonctionnement normal, lorsque la tourelle 3 est orientée à 0°, l'opérateur de la nacelle 1, non représenté, est positionné dans le panier 7 et regarde en direction du module avant 9.

Chaque module d'essieu 8 ou 9 comprend deux systèmes d'essieu, respectivement 11 et 12 ou 13 et 14. Chaque système d'essieu comporte une roue, respectivement 15, 16, 17 et 18, de préférence motrice et directrice, équipée d'un pneu mousse ou d'un pneu gonflable. Chaque roue 15, 16, 17 ou 18 est mobile en rotation autour d'un axe central de rotation, respectivement X15, X16, X17 et X18. A l'arrière de la nacelle 1, supporté par un plateau de châssis arrière 10, le module 8 comprend un système d'essieu arrière-gauche 11 muni d'une roue arrière-gauche 15 et un système d'essieu arrière-droit 12 muni d'une roue arrière-droite 16. A l'avant de la nacelle 1, le module 9 comprend un système d'essieu avant-gauche 13 muni d'une roue avant-gauche 17 et un système d'essieu avant-droit 14 muni d'une roue avant-droite 18.

Chaque système d'essieu 11 à 14 comprend trois sous-systèmes qui sont décrits par la suite, permettant la mise en oeuvre des fonctions de direction, d'extension/rétractation, et d'oscillation. En outre, chaque système d'essieu comprend un sous-système de motorisation, incluant un moteur d'entraînement et des moyens de transmission d'un mouvement de rotation et d'un couple d'entraînement à sa roue, ces moteur et moyens n'étant pas représentés.

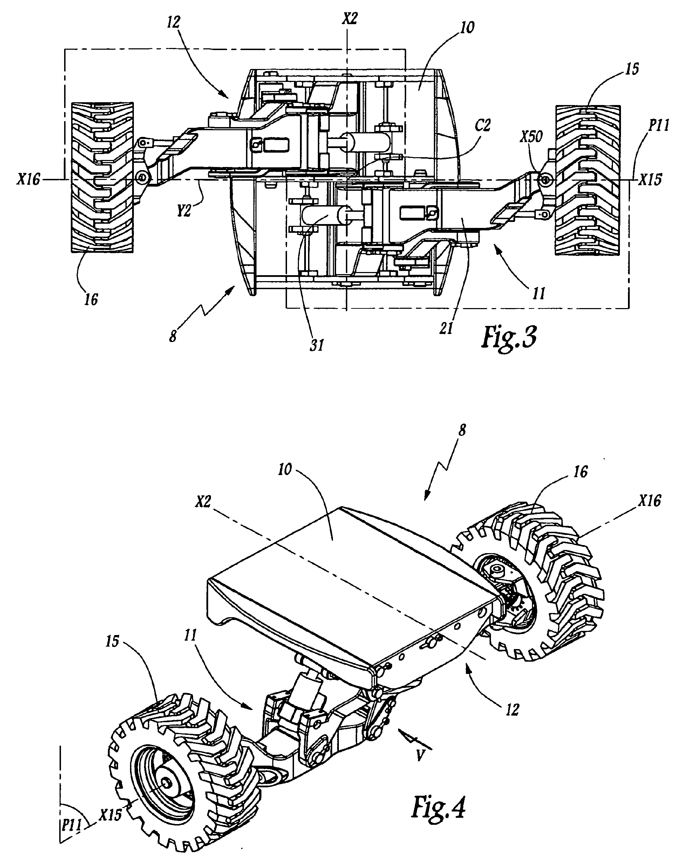

Sur les figures 3 et 4 est représenté un module d'essieu arrière 8 en position étendue. Le module 8 est supporté par le plateau de châssis arrière 10. Les deux systèmes d'essieu 11 et 12 ne sont ni alignés, ni imbriqués, mais décalés l'un par rapport à l'autre, dans le plan horizontal, le long de l'axe X2 pour permettre une rétractation optimale et présenter un encombrement réduit. Avantageusement, les roues 15 et 16 sont alignées selon un axe Y2 perpendiculaire à l'axe X2. Ainsi, les systèmes d'essieu 11 et 12 sont adjacents et disposés en symétrie par rapport à un point C2, qui est situé à l'intersection des axes X2 et Y2.

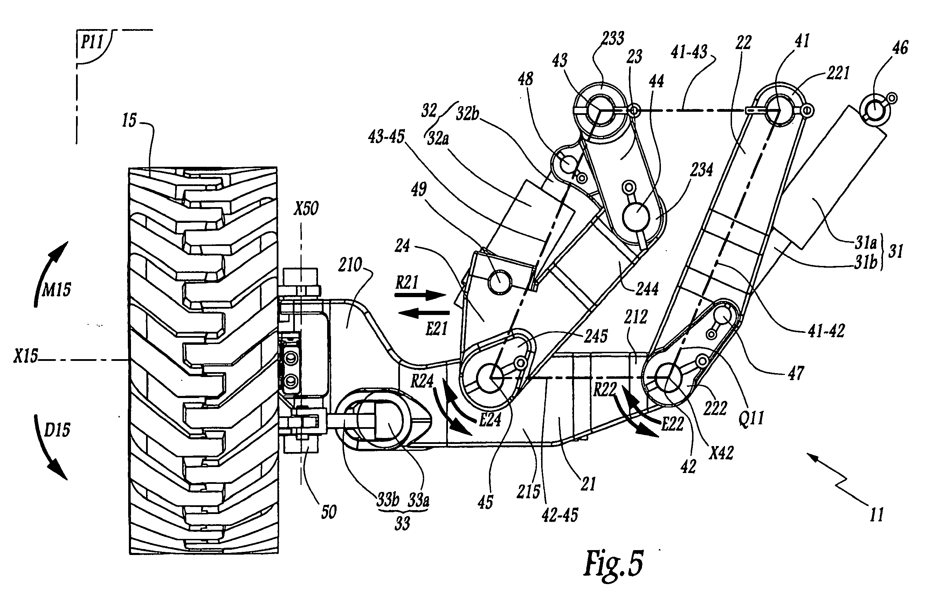

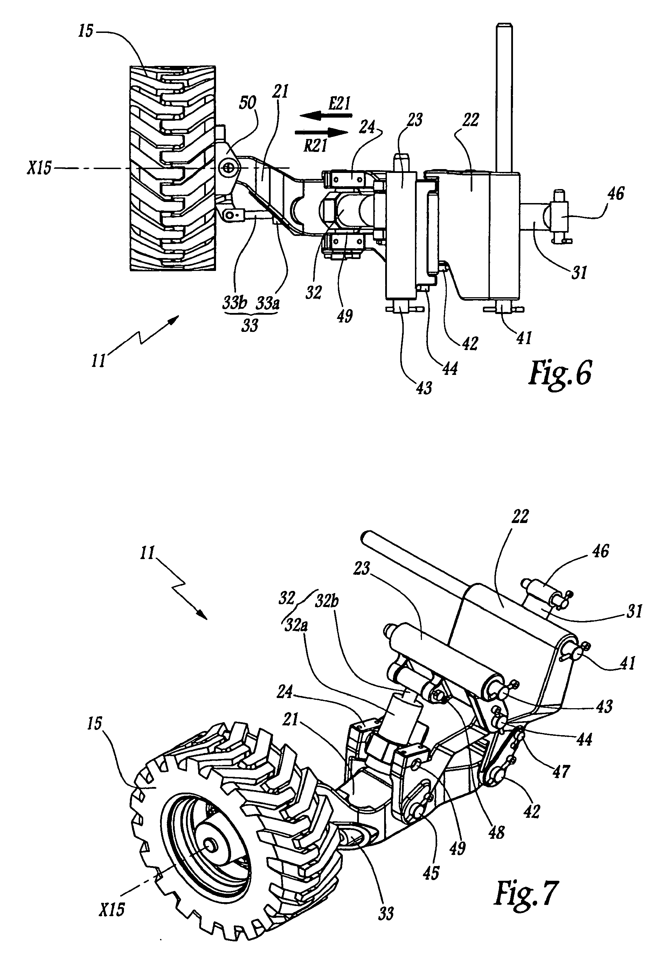

Sur les figures 5, 6 et 7 est représenté le système d'essieu 11, conforme à l'invention, en position étendue. En référence aux figures 1 à 4, le système d'essieu 11 correspond au système d'essieu arrière-gauche, supporté par le châssis 10, non représenté sur les figures 5 à 7. En pratique, le système d'essieu 12, ainsi que les systèmes d'essieu 13 et 14 du module avant 9, ont un fonctionnement identique.

Le système d'essieu 11 comprend trois sous-systèmes, chacun muni d'un actionneur, qui est avantageusement un vérin hydraulique. Les sous-systèmes d'extension/rétractation, d'oscillation et de direction comprennent respectivement des vérins hydrauliques 31, 32 et 33. Une centrale hydraulique, non représentée, comporte une unité de contrôle pilotant l'alimentation des vérins 31, 32 et 33 en fluide hydraulique. Le contrôle de cette alimentation est tel que le sous-système d'extension/rétractation et le sous-système d'oscillation sont actionnés indépendamment l'un de l'autre.

Le système d'essieu 11 comprend quatre bras rigides 21, 22, 23 et 24, qui sont connectés entre eux, avec les vérins 31 et 32 et avec le châssis 10, par des articulations 41, 42, 43, 44, 45, 46, 47, 48 et 49 de type pivot, d'axes sensiblement parallèles à l'axe longitudinal X2 du châssis 2.

Une extrémité 212 du bras 21 et une extrémité 222 du bras 22 sont connectées par l'articulation 42, qui présente un axe central X42 parallèle à l'axe longitudinal X2 du châssis 2. L'autre extrémité 221 du bras 22 est connectée au châssis 10 par l'articulation 41. Une extrémité 233 du bras 23 est connectée au châssis 10 par l'articulation 43, tandis que l'autre extrémité 234 du bras 23 est connectée à une extrémité 244 du bras 24 par l'articulation 44. L'autre extrémité 245 du bras 24 est connectée à une partie médiane 215 du bras 21 par l'articulation 45. Le vérin 31 est connecté au châssis 10 par l'articulation 46 et au bras 22 par l'articulation 47. Le vérin 32 est connecté au bras 23 par l'articulation 48 et au bras 24 par l'articulation 49.

La roue 15 tourne autour d'un axe central X15 et est supportée par un bras de support d'essieu. Plus précisément, la roue 15 est positionnée à une extrémité 210 du bras 21 opposée à son extrémité 212, avec une articulation 50 intermédiaire réalisant une liaison pivot. L'articulation 50 est centrée sur un axe X50 qui est perpendiculaire à l'axe X15 et aux axes des articulations 41 à 49, notamment l'axe X42 de l'articulation 42. L'axe X50 est vertical lorsque la roue 15 repose sur un sol plan. La roue 15 peut être orientée par l'action d'un vérin 33, comprenant un corps 33a agencé de manière fixe dans le bras 21 et une tige 33b reliée à la roue 15.

Lorsque la fonction de direction est activée, le vérin 33 est actionné et la tige 33b fait pivoter la roue 15 par rapport au bras 21 au niveau de l'articulation 50. Ainsi, l'axe X15 pivote autour de l'axe X50.

Les éléments 15, 21, 33 et 50 appartiennent au sous-système de direction du système d'essieu 11 et sont destinés à mettre en oeuvre la fonction direction.

Les sous-systèmes d'extension et d'oscillation sont combinés sous la forme d'un quadrilatère Q11 déformable dans un plan P11, lequel est parallèle au plan de la figure 5. L'axe X50 est parallèle au plan P11, tandis que les axes X2 et X42 sont perpendiculaires au plan P11.

Le quadrilatère Q11 est formé entre les quatre articulations: 41, 42, 45 et 43. Le quadrilatère Q11 comprend trois côtés de longueur constante, matérialisés par les éléments suivants : le châssis 10 entre les articulations 41 et 43, le bras 22 entre les articulations 41 et 42 et le bras 21 entre les articulations 42 et 45. La distance entre les articulations 41 et 43 est de longueur égale à la distance entre les articulations 42 et 45. Autrement dit, un segment 41-43 entre les articulations 41 et 43 présente une longueur égale à celle d'un segment 42-45 entre les articulations 42 et 45.

Le quadrilatère Q11 comprend également un côté de longueur L11 sélectivement variable, correspondant au segment 43-45 entre les articulations 43 et 45.

Lorsque la fonction d'oscillation n'est pas activée, le vérin 32 conserve une longueur de repos constante, et forme avec les bras 23 et 24 un ensemble rigide, articulé sur le châssis 10 au niveau de l'articulation 43 et sur le bras 21 au niveau de l'articulation 45. Ainsi, lorsque la fonction oscillation n'est pas activée la longueur L11 du segment 43-45 reste constante. Dans ce cas, la distance entre les articulations 41 et 42 est égale à la distance entre les articulations 43 et 45. Autrement dit, un segment 41-43 entre les articulations 41 et 43 présente une longueur égale à celle d'un segment 42-45 entre les articulations 42 et 45.

Dans ce cas, le quadrilatère Q11 est un parallélogramme.

Lorsque la fonction d'oscillation est activée, la longueur L11 du segment 43-45 varie, et le quadrilatère Q11 est irrégulier.

En pratique, le vérin 31 permet la mise en oeuvre de la fonction d'extension/rétractation. Le corps 31a et la tige 31 b du vérin 31 sont partiellement agencés entre deux branches du bras 22, avec lequel l'extrémité de la tige 31 b est connectée par l'articulation 47, tandis que le corps 31a est connecté au châssis 10 par l'articulation 46.

Lorsque la fonction d'extension est activée, le vérin 31 est actionné, la tige 31 b sort du corps 31 a, la longueur du vérin 31 augmente, de même que la distance entre les articulations 46 et 47. Comme l'articulation 46 est fixée sur le châssis 10, l'articulation 47 est poussée vers l'extérieur, à savoir du côté de la roue 15. Comme l'articulation 47 relie la tige 31 b au bras 22, lui-même connecté au châssis 10 par l'articulation 41 qui est fixe, le bras 22 est poussé vers l'extérieur et pivote autour de l'articulation 41 en s'éloignant de l'articulation 46.

Ainsi, le quadrilatère Q11 est déformé dans le plan P11 : le bras 22 effectue une rotation selon la flèche représentée E22, ce qui déplace le bras 21, qui est connecté au bras 22 par l'articulation 42 et au bras 24 par l'articulation 45, vers l'extérieur, en direction de la roue 15. Dans le même temps, l'ensemble rigide constitué par le bras 23, le bras 24 et le vérin 32 effectue une rotation selon la flèche E24. Comme la distance entre les articulations 41 et 43 est sensiblement égale à la distance entre les articulations 42 et 45 et comme la distance entre les articulations 41 et 43 est constante, alors le bras 21 articulé au niveau des articulations 42 et 45 effectue un mouvement de translation circulaire perpendiculairement à l'axe X2, selon la flèche E21.

Autrement dit, lorsque l'action du vérin 31 déforme le quadrilatère Q11 dans le plan P11, d'une part, les deux articulations 41 et 43 fixes qui sont liées au châssis 10 définissent le segment fixe 41-43 perpendiculaire à l'axe X42 et, d'autre part, les deux articulation 42 et 45 mobiles définissent le segment 42-45 qui se déplace suivant un mouvement de translation circulaire E21 perpendiculaire à l'axe X42 dans le plan P11, de manière à translater le bras 21 et donc la roue 15.

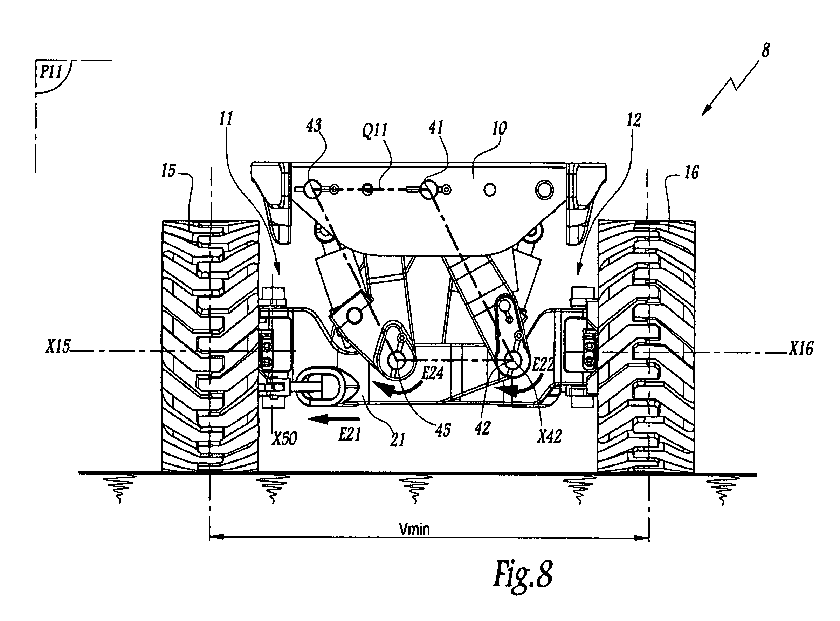

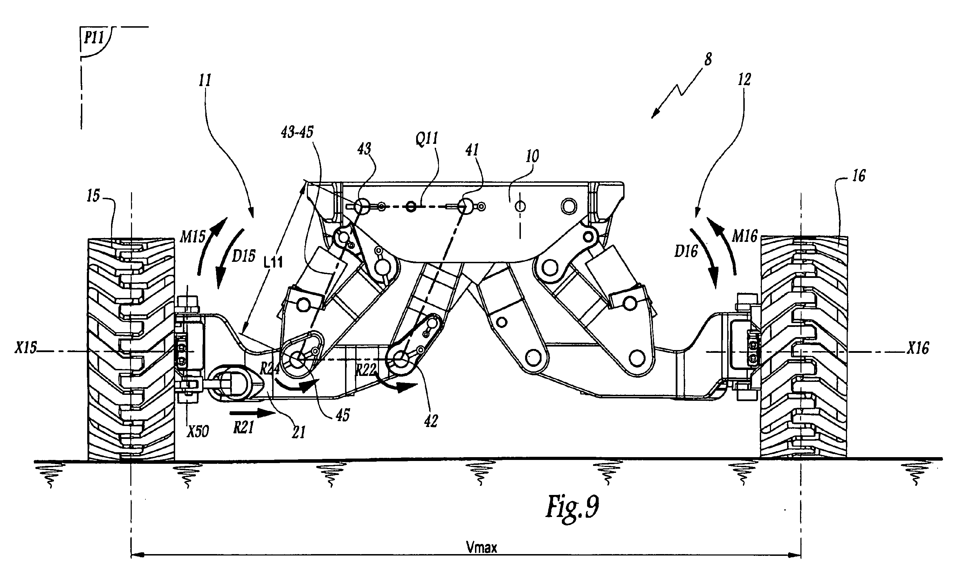

En déformant le quadrilatère Q11 par l'intermédiaire du vérin 31 suivant les mouvements de rotation E22 et E24 et de translation circulaire E21, le système d'essieu 11 passe de la position rétractée de la figure 8 à la position étendue de la figure 9. A l'inverse, lorsque la fonction de rétractation est activée, le système d'essieu 11 passe de la position étendue à la position rétractée en suivant des mouvements R21, R22 et R24 opposés aux mouvements E21, E22 et E24.

Les éléments 21, 22, 23, 24, 31, 41, 42, 43, 45, 46 et 47 forment les moyens d'extension et de rétractation du sous-système d'extension/rétractation appartenant au système d'essieu 11, destinés à mettre en oeuvre la fonction d'extension/rétractation.

En pratique, le vérin 32 permet la mise en oeuvre de la fonction d'oscillation. Le corps 32a du vérin 32 est partiellement agencé entre deux branches du bras 24, avec lequel il est connecté par l'articulation 49. L'extrémité de la tige 32b est agencée entre deux branches du bras 23, avec lequel elle est connectée par l'articulation 48.

Lorsque la fonction d'oscillation est activée, de préférence lorsque le système d'essieu 11 est en position étendue, le vérin 32 est actionné, ainsi la roue 15 et le bras 21 pivotent autour de l'axe X42, parallèlement au plan P11, dans l'une ou l'autre direction.

Lorsque la tige 32b rentre dans le corps 32a, la longueur du vérin 32 se réduit, de ce fait la distance entre les articulations 48 et 49 se réduit, et donc la distance entre les articulations 43 et 45 se réduit. Ainsi, le bras 21 pivote autour de l'axe central X42 de l'articulation 42 en se rapprochant de l'articulation 43 et donc du châssis 10, et la roue 15 se rapproche du châssis 10 selon la flèche M15.

Lorsque la tige 32b sort du corps 32a, la longueur du vérin 32 augmente, de ce fait la distance entre les articulations 48 et 49 augmente, et donc la distance entre les articulations 43 et 45 augmente. Ainsi, le bras 21 pivote autour de l'axe central X42 de l'articulation 42 en s'éloignant de l'articulation 43 et donc du châssis 10, et la roue 15 s'éloigne du châssis 10 selon la flèche D15.

Autrement dit, lorsque l'action du vérin 32 déforme le quadrilatère Q11, d'une part, le segment 41-43 reste fixe et perpendiculaire à l'axe X42 et, d'autre part, la longueur L11 du segment déformable 43-45 varie, tandis que le segment oscillant 42-45 pivote autour de l'axe X42, de manière que le bras 21 et la roue 15 se déplacent selon un mouvement de rotation D15 ou M15 autour de l'axe X42, parallèlement au plan P11.

Les éléments 21, 23, 24, 32, 42, 43, 44, 45, 48 et 49 forment les moyens d'oscillation du sous-système oscillation appartenant au système d'essieu 11, destinés à mettre en oeuvre la fonction d'oscillation. Leur configuration particulière permet de déformer le segment déformable 43-45 et donc de faire varier la longueur L11, ce qui entraine l'inclinaison du bras 21 et de la roue 15 parallèlement au plan P11.

En pratique, plusieurs éléments du système d'essieu 11 sont communs aux moyens d'extension et de rétractation et aux moyens d'oscillation, à savoir les éléments 21, 23, 24, 42, 43 et 45.

En combinant la fonction d'extension/rétractation et la fonction d'oscillation, on améliore également les performances de la fonction de motricité. En effet, chacune des quatre roues 15, 16, 17 et 18 est avantageusement en appui sur le sol avec une surface de contact maximale, quelque soit la configuration du sol. Ainsi, la motricité est améliorée en comparaison avec une nacelle présentant une ou plusieurs roues partiellement en appui sur le sol.

Sur les figures 8 à 10 est représenté le module arrière 8, dans différentes configurations de fonctionnement.

Sur la figure 8, le module 8 est en position rétractée. En effet, chacun des systèmes d'essieu 11 et 12 est en position rétractée. Les roues 15 et 16 sont rapprochées au maximum. La voie a une valeur minimale Vmin. Le système d'essieu 11 peut passer de la position rétractée à la position étendue en suivant les mouvements de rotation E22 et E23 et de translation circulaire E21. Le fonctionnement est similaire pour le système d'essieu 12, disposé en symétrie par rapport au point C2.

Sur la figure 9, le module 8 est en position étendue. En effet, chacun des systèmes d'essieu 11 et 12 est en position étendue. Les roues 15 et 16 sont éloignées au maximum. La voie a une valeur maximale Vmax. Le système d'essieu 11 peut passer de la position étendue à la position rétractée en suivant les mouvements de rotation R22 et R23 et de translation circulaire R21. Le fonctionnement est similaire pour le système d'essieu 12, disposé en symétrie par rapport au point C2, l'intersection des axes X2 et Y2, est représenté sur la figure 3. Le rapport d'extension de la voie est proche de 1,75, soit une augmentation de 75% de la distance entre les roues 15 et 16 de la nacelle 1 dans le sens de sa largeur.

Le module avant 9, non représenté sur les figures 8 à 10, peut également être étendu ou rétracté selon un mode de fonctionnement similaire à celui du module arrière 8. Ainsi, lorsque chacun des systèmes d'essieu 11, 12, 13 et 14 est en position étendue, la stabilité de la nacelle 1 est fortement améliorée.

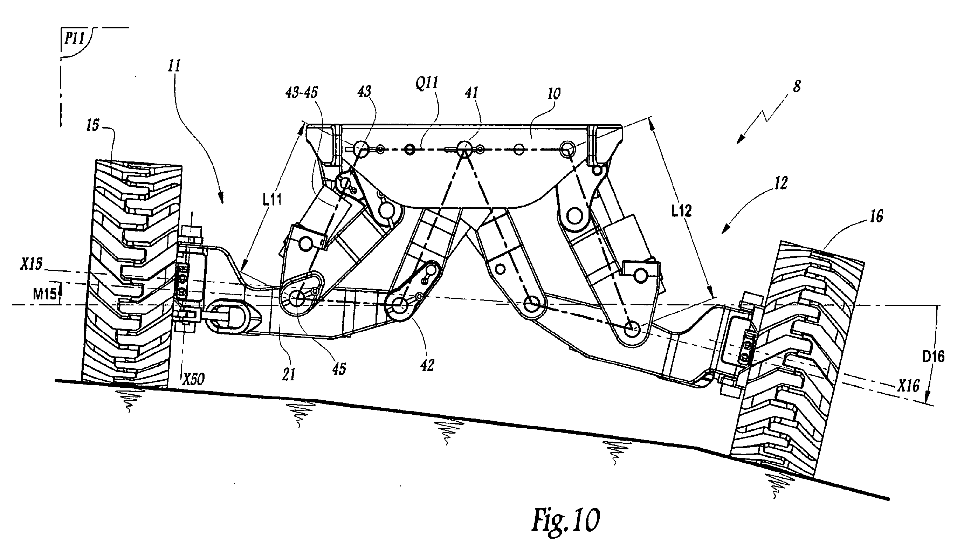

Sur la figure 10, le module 8 est en position étendue et la fonction d'oscillation est activée. Les roues 15 et 16 sont déplacées dans le plan vertical en suivant un mouvement d'oscillation, afin de s'adapter à la configuration inclinée du sol. La roue 15 monte au dessus de sa position horizontale usuelle des figures 8 et 9 en effectuant une rotation M15, tandis que la roue 16 descend en dessous de sa position horizontale usuelle en effectuant une rotation D16, tout en restant en contact avec le sol.

Le module avant 9 peut également osciller selon un mode de fonctionnement similaire.

Chaque système d'essieu 11, 12, 13 et 14 peut osciller de manière indépendante. De préférence, la fonction d'oscillation d'un système d'essieu 11, 12, 13 ou 14 est activée lorsque ce dernier est en position étendue. Ainsi, en combinant les fonctions d'extension et d'oscillation, la stabilité de la nacelle 1 peut être améliorée par comparaison avec une mise en oeuvre de la seule fonction d'extension. Un sol irrégulier ou en pente n'est donc plus un obstacle à l'utilisation de la nacelle 1, au bénéfice de la sécurité des personnels utilisateurs.

En pratique, il existe deux modes d'extension des systèmes d'essieu 11, 12, 13 et 14. La nacelle 1 peut comprendre des moyens de mise en oeuvre de l'un ou l'autre, ou bien des deux modes d'extension.

Le premier mode d'extension met en oeuvre des moyens de déplacement du châssis en hauteur, notamment des vérins de levage, non représentés. Tout d'abord le châssis est surélevé et les roues ne sont plus en contact avec le sol, puis chaque système d'essieu est déplacé de la position rétractée à la position étendue, puis le châssis redescend et les roues reposent de nouveau sur le sol.

Le second mode d'extension correspond à une sortie dynamique des systèmes d'essieu, sans qu'il soit nécessaire de surélever le châssis. Lorsque la nacelle est à l'arrêt, l'extension est gênée, voire rendue impossible, par le frottement des roues sur le sol. Cependant, lorsque la nacelle se déplace vers l'avant ou vers l'arrière, ou bien alternativement d'avant en arrière, au dessus d'une certaine vitesse, on peut envisager d'activer la fonction d'extension. Ainsi, durant le déplacement de la nacelle, chaque système d'essieu est progressivement déplacé de la position rétractée à la position étendue, ou réciproquement.

Pour l'un ou l'autre mode d'extension, le fonctionnement est identique lorsque les systèmes d'essieu passent de la position étendue à la position rétractée.

En variante, les roues d'un système d'essieu ne sont pas directrices et/ou ne sont pas motrices. Toutefois, la nacelle comporte au moins une roue directrice, de préférence deux roues directrices agencée sur le même module d'essieu. De même, la nacelle comporte au moins une roue motrice, de préférence deux roues motrices agencée sur le même module d'essieu. Ainsi, la nacelle peut comporter par exemple deux modules qui sont chacun moteurs et directeurs, ou bien un module moteur et un module directeur.

Selon une autre variante, les roues et les bras de support des systèmes d'essieu d'un même module ne sont pas mobiles en extension, rétractation et/ou oscillation dans le même plan, mais dans des plans sensiblement parallèles entre eux.

Selon une autre variante, les systèmes d'essieu d'un même module ne sont pas agencés en parallèle, mais légèrement inclinés l'un par rapport à l'autre. Cette configuration est moins avantageuse en matière d'encombrement des systèmes d'essieu, mais peut améliorer la stabilité de la nacelle, notamment lorsque les systèmes d'essieu sont étendus aux angles de la nacelle, ce qui augmente simultanément la voie et l'empattement.

Selon une autre variante, la nacelle comporte un unique module d'essieu équipé de systèmes d'essieu extensibles et oscillants, tandis que le ou les modules d'essieu complémentaires sont d'un autre type, non oscillant.

Selon une autre variante, la nacelle comporte plus de deux modules d'essieu, qui peuvent être identiques ou de types différents. Par exemple, une nacelle équipée de trois modules peut comprendre un module directeur, un module moteur, et un module qui est extensible et oscillant. Selon un autre exemple, les trois modules peuvent être chacun directeur, moteur, extensible et oscillant.

De préférence, une unité de gestion électronique permet de calculer la portée maximale admissible du panier en fonction de différents paramètres tels que : la rotation de la tourelle, l'extension du mât télescopique, la charge de la plate-forme, la voie entre roues et/ou l'inclinaison du terrain. Tout paramètre adapté peut sélectivement être ou ne pas être pris en compte.

De manière simplifiée, le calcul de portée maximale admissible peut ne pas dépendre de la rotation de la tourelle, mais intégrer le cas le plus défavorable : lorsque la tourelle et le mât sont orientés à 90° de l'axe X2 du châssis.

L'invention a été représentée dans le cas de son utilisation sur un véhicule de type nacelle élévatrice. Elle est applicable à tous les engins de manutention ou de levage, notamment les chariots élévateurs, les préparateurs de commande, les grues, ainsi qu'à tous les engins de travaux publics.

## Revendications

1. Système d'essieu (11), comprenant une roue (15) mobile en rotation autour d'un axe de rotation (X15), et au moins :
- un bras de support (21) qui supporte la roue (15) à une première extrémité (210) du bras et qui est mobile en rotation autour d'un premier axe (X42) d'une articulation (42) agencée à une deuxième extrémité (212) du bras,
- au moins quatre articulations (41, 42, 45, 43) qui définissent les quatre sommets d'un quadrilatère (Q11) agencé dans un plan (P11) perpendiculaire au premier axe (X42), et
- un sous-système d'extension/rétractation incluant des moyens d'extension et de rétractation (21, 22, 23, 24, 31, 41, 42, 43, 45, 46, 47) de la roue (15), les moyens d'extension et de rétractation (21, 22, 23, 24, 31, 41, 42, 43, 45, 46, 47) étant aptes à déformer le quadrilatère (Q11) dans le plan (P11) en déplaçant (E21, R21) la roue (15) et le bras de support (21) selon un mouvement de translation circulaire perpendiculaire au premier axe (X42),
**caractérisé en ce que** le système d'essieu (11) comprend également un sous-système d'oscillation incluant des moyens d'oscillation (21, 23, 24, 32, 42, 43, 44, 45, 48, 49) de la roue (15), les moyens d'oscillation (21, 23, 24, 32, 42, 43, 44, 45, 48, 49) étant aptes à déformer le quadrilatère (Q11) dans le plan (P11) en déplaçant la roue (15) et le bras de support (21) selon un mouvement de rotation (D15, M15) autour du premier axe (X42).

2. Système d'essieu selon la revendication précédente, **caractérisé en ce que** les moyens d'extension et de rétractation (21, 22, 23, 24, 31, 41, 42, 43, 45, 46, 47) comprennent un premier vérin (31), les moyens d'oscillation (21, 23, 24, 32, 42, 43, 44, 45, 48, 49) comprennent un deuxième vérin (32), et **en ce que** le premier vérin (31) et le deuxième vérin (32) sont actionnés indépendamment l'un de l'autre et chacun est apte à déformer le quadrilatère (Q11) dans le plan (P11).

3. Système d'essieu selon l'une des revendications précédentes, **caractérisé en ce que** le système (11) comprend un sous-système de motorisation incluant des moyens de transmission aptes à transmettre à la roue (15) un couple d'entraînement en rotation autour de son axe de rotation (X15).

4. Système d'essieu selon l'une des revendications précédentes, **caractérisé en ce que** le système (11) comprend un sous-système de direction incluant des moyens d'orientation (33, 50) de l'axe de rotation (X15) de la roue (15) en rotation autour d'un deuxième axe (X50) perpendiculaire au premier axe (X42), avec :
- une articulation (50) agencée à la première extrémité (210) du bras support (21), apte à réaliser une liaison pivot autour du deuxième axe (X50) entre la roue (15) et le bras support (21), et
- un vérin (33) agencé entre le bras support (21) et la roue (15).

5. Système d'essieu selon l'une des revendications précédentes, **caractérisé en ce que** les moyens d'extension et de rétractation (21, 22, 23, 24, 31, 41, 42, 43, 45, 46, 47) du sous-système d'extension/rétractation incluent un vérin (31) apte à déformer le quadrilatère (Q11) dans ledit plan (P11), avec :
- deux articulations (41, 43) fixes qui définissent un segment fixe (41-43) perpendiculaire au premier axe (X42), et
- deux articulations (42, 45) mobiles lorsque le vérin (31) est actionné, qui définissent un segment (42-45) mobile suivant un mouvement de translation circulaire (E21) perpendiculaire au premier axe (X42).

6. Système d'essieu selon l'une des revendications précédentes, **caractérisé en ce que** les moyens d'oscillation (21, 23, 24, 32, 42, 43, 44, 45, 48, 49) du sous-système d'oscillation incluent un vérin (32) apte à déformer le quadrilatère (Q11) dans ledit plan (P11), avec :
- deux articulations (41, 43) fixes qui définissent un segment fixe (41-43) perpendiculaire au premier axe (X42),
- deux articulations (43, 45) qui définissent un segment déformable (43-45) dont la longueur (L11) est variable lorsque le vérin (32) est actionné, et
- deux articulations (42, 45) qui définissent un segment oscillant (42-45) mobile en rotation (D15, M15) autour du premier axe (X42) lorsque la longueur du segment déformable (43-45) varie.

7. Système d'essieu selon la revendication 6, **caractérisé en ce que** les moyens d'oscillation (21, 23, 24, 32, 42, 43, 44, 45, 48, 49) comprennent :
- une première articulation (43) fixe agencée à une première extrémité (233) d'un premier bras (23),
- une deuxième articulation (45) mobile agencée à une première extrémité (245) d'un deuxième bras (24),
- une troisième articulation (44) agencée entre une deuxième extrémité (234) du premier bras (23) et une deuxième extrémité (244) du deuxième bras (24),
et **en ce que** le vérin (32) est positionné entre une quatrième articulation (48) agencée sur le premier bras (23) et une cinquième articulation (49) agencée sur le deuxième bras (24), de manière que lorsque le vérin (32) est actionné, le premier bras (23) et le deuxième bras (24) pivotent l'un par rapport à l'autre au niveau de la troisième articulation (44) et la longueur (L11) du segment déformable (43-45), compris entre les première et deuxième articulations (43, 45), varie.

8. Module d'essieu (8 ; 9), **caractérisé en ce qu'**il comprend deux systèmes d'essieu (11, 12 ; 13, 14) selon l'une des revendications précédentes, et **en ce que** les roues (15, 16 ; 17, 18) et les bras de support (21) des systèmes d'essieu (11, 12 ; 13, 14) respectifs sont mobiles en extension, rétractation et/ou oscillation dans des plans sensiblement parallèles entre eux.

9. Module d'essieu (8 ; 9) selon la revendication 8, **caractérisé en ce que** les roues (15, 16, 17, 18) et les bras de support (21) des systèmes d'essieu (11, 12 ; 13, 14) de ce module sont mobiles en extension, rétractation et/ou oscillation dans un même plan (P11).

10. Véhicule (1), notamment de type nacelle élévatrice, **caractérisé en ce qu'**il comprend au moins un châssis (2, 10) et au moins un module d'essieu (8, 9) selon l'une des revendications 9 ou 10, avec notamment un module avant (9) disposé à l'avant du châssis (2) et/ou un module arrière (8) disposé à l'arrière (10) du châssis (2).

## Claims

1. Axle system (11) comprising a wheel (15) which is movable in rotation about an axis of rotation (X15), and at least:
- one support arm (21) which supports the wheel (15) at a first end (210) of the arm and which is movable in rotation about a first axis (X42) of a joint (42) which is arranged at a second end (212) of the arm;
- at least four joints (41, 42, 45, 43) which define the four vertices of a quadrilateral (Q11) which is arranged within a plane (P11) perpendicular to the first axis (X42); and
- an extending/retracting sub-system which includes means (21, 22, 23, 24, 31, 41, 42, 43, 45, 46, 47) for extending and retracting the wheel (15), said extending and retracting means (21, 22, 23, 24, 31, 41, 42, 43, 45, 46, 47) being capable of deforming the quadrilateral (Q11) within the plane (P11) by displacing (E21, R21) the wheel (15) and the support arm (21) in the direction of a movement of circular translation perpendicular to the first axis (X42),
**characterised in that** the axle system (11) also comprises a swinging sub-system which includes means (21, 23, 24, 32, 42, 43, 44, 45, 48, 49) for swinging the wheel (15), said swinging means (21, 23, 24, 32, 42, 43, 44, 45, 48, 49) being capable of deforming the quadrilateral (Q11) within the plane (P11) by displacing the wheel (15) and the support arm (21) in the direction of a movement of rotation (D15, M15) about the first axis (X42).

2. Axle system according to the preceding claim, **characterised in that** the extending and retracting means (21, 22, 23, 24, 31, 41, 42, 43, 45, 46, 47) comprise a first jack (31) and the swinging means (21, 23, 24, 32, 42, 43, 44, 45, 48, 49) comprise a second jack (32), and **in that** the first jack (31) and the second jack (32) are activated independently of one another and each is capable of deforming the quadrilateral (Q11) within the plane (P11).

3. Axle system according to one of the preceding claims, **characterised in that** the system (11) comprises a motorising sub-system which includes transmitting means which are capable of transmitting to the wheel (15) a torque for driving it in rotation about its axis of rotation (X15).

4. Axle system according to one of the preceding claims, **characterised in that** the system (11) comprises a steering sub-system which includes means (33, 50) for guiding the axis of rotation (X15) of the wheel (15) in rotation about a second axis (X50) perpendicular to the first axis (X42), with:
- a joint (50) which is arranged at the first end (210) of the support arm (21) and is capable of producing a pivoting link about the second axis (X50) between the wheel (15) and the support arm (21); and
- a jack (33) which is arranged between the support arm (21) and the wheel (15).

5. Axle system according to one of the preceding claims, **characterised in that** the extending and retracting means (21, 22, 23, 24, 31, 41, 42, 43, 45, 46, 47) belonging to the extending/retracting sub-system include a jack (31) which is capable of deforming the quadrilateral (Q11) within the said plane (P11), with:
- two fixed joints (41, 43) which define a fixed segment (41-43) perpendicular to the first axis (X42); and
two joints (42, 45) which are movable when the jack (31) is activated and which define a segment (42-45) which is movable in the direction of a movement of circular translation (E21) perpendicular to the first axis (X42).

6. Axle system according to one of the preceding claims, **characterised in that** the swinging means (21, 23, 24, 32, 42, 43, 44, 45, 48, 49) belonging to the swinging sub-system include a jack (32) which is capable of deforming the quadrilateral (Q11) within the said plane (P11), with:
- two fixed joints (41, 43) which define a fixed segment (41-43) perpendicular to the first axis (X42);
- two joints (43, 45) which define a deformable segment (43-45), the length (L11) of which is variable when the jack (32) is activated; and
- two joints (42, 45) which define a swinging segment (42-45) which is movable in rotation (D15, M15) about the first axis (X42) when the length of the deformable segment (43-45) varies.

7. Axle system according to claim 6, **characterised in that** the swinging means (21, 23, 24, 32, 42, 43, 44, 45, 48, 49) comprise:
- a fixed first joint (43) which is arranged at a first end (233) of a first arm (23);
- a movable second joint (45) which is arranged at a first end (245) of a second arm (24);
- a third joint (44) which is arranged between a second end (234) of the first arm (23) and a second end (244) of the second arm (24),
and **in that** the jack (32) is positioned between a fourth joint (48) which is arranged on the first arm (23) and a fifth joint (49) which is arranged on the second arm (24), in such a way that, when the jack (32) is activated, the first arm (23) and the second arm (24) pivot in relation to one another at the third joint (44) and the length (L11) of the deformable segment (43-45), which is included between the first and second joints (43, 45), varies.

8. Axle module (8; 9), **characterised in that** it comprises two axle systems (11, 12; 13, 14) according to one of the preceding claims, and **in that** the wheels (15, 16; 17, 18) and the support arms (21) of the respective axle systems (11, 12; 13, 14) are movable in extension, retraction and/or swinging motion within planes which are substantially parallel with one another.

9. Axle module (8; 9) according to claim 8, **characterised in that** the wheels (15, 16; 17, 18) and the support arms (21) of the axle systems (11, 12; 13, 14) of the said module are movable in extension, retraction and/or swinging motion within the same plane (P11).

10. Vehicle (1), especially of the lifting platform type, **characterised in that** it comprises at least one chassis (2, 10) and at least one axle module (8, 9) according to either of claims 9 or 10 with, especially, a front module (9) which is disposed at the front of the chassis (2) and/or a rear module (8) which is disposed at the rear (10) of said chassis (2).

## Patentansprüche

1. Achssystem (11), umfassend ein um eine Drehachse (X15) drehbewegliches Rad (15), sowie:
- mindestens einen Tragarm (21), welcher das Rad (15) an einem ersten Ende (210) des Armes trägt und welcher drehbar um eine erste Achse (X42) eines Gelenks (42) ist, das an einem zweiten Ende (212) des Armes angeordnet ist,
- mindestens vier Gelenke (41, 42, 45, 43), welche die vier Ecken eines Vierecks (Q11) definieren, das in einer zu der ersten Achse (X42) senkrechten Ebene (P11) angeordnet ist, und
- mindestens ein Aus-/Einfahr-Teilsystem, welches Mittel zum Aus- und Einfahren (21, 22, 23, 24, 31, 41, 42, 43, 45, 46, 47) des Rades (15) aufweist, wobei die Aus- und Einfahrmittel (21, 22, 23, 24, 31, 41, 42, 43, 45, 46, 47) geeignet sind, das Viereck (Q11) in der Ebene (P11) zu verformen, indem sie das Rad (15) und den Tragarm (21) in einer zu der ersten Achse (X42) senkrechten kreisförmigen Translationsbewegung bewegen (E21, R21),
**dadurch gekennzeichnet, dass** das Achssystem (11) außerdem ein Schwingungs-Teilsystem umfasst, welches Schwingungsmittel (21, 23, 24, 32, 42, 43, 44, 45, 48, 49) für das Rad (15) aufweist, wobei die Schwingungsmittel (21, 23, 24, 32, 42, 43, 44, 45, 48, 49) geeignet sind, das Viereck (Q11) in der Ebene (P11) zu verformen, indem sie das Rad (15) und den Tragarm (21) in einer Drehbewegung (D15, M15) um die erste Achse (X42) bewegen.

2. Achssystem nach dem vorhergehenden Anspruch, **dadurch gekennzeichnet, dass** die Aus- und Einfahrmittel (21, 22, 23, 24, 31, 41, 42, 43, 45, 46, 47) einen ersten Zylinder (31) umfassen und die Schwingungsmittel (21, 23, 24, 32, 42, 43, 44, 45, 48, 49) einen zweiten Zylinder (32) umfassen, und dadurch, dass der erste Zylinder (31) und der zweite Zylinder (32) unabhängig voneinander betätigt werden und jeder geeignet ist, das Viereck (Q11) in der Ebene (P11) zu verformen.

3. Achssystem nach einem der vorhergehenden Ansprüche, **dadurch gekennzeichnet, dass** das System (11) ein Motorisierungs-Teilsystem umfasst, das Übertragungsmittel aufweist, die geeignet sind, auf das Rad (15) ein Antriebsdrehmoment zur Rotation um seine Drehachse (X15) zu übertragen.

4. Achssystem nach einem der vorhergehenden Ansprüche, **dadurch gekennzeichnet, dass** das System (11) ein Lenkungs-Teilsystem umfasst, das Mittel zur rotatorischen Ausrichtung (33, 50) der Drehachse (X15) des Rades (15) um eine zweite Achse (X50), die zu der ersten Achse (X42) senkrecht ist, aufweist, mit:
- einem Gelenk (50), das an dem ersten Ende (210) des Tragarms (21) angeordnet ist und geeignet ist, eine Schwenkverbindung um die zweite Achse (X50) zwischen dem Rad (15) und dem Tragarm (21) zu realisieren, und
- einem Zylinder (33), der zwischen dem Tragarm (21) und dem Rad (15) angeordnet ist.

5. Achssystem nach einem der vorhergehenden Ansprüche, **dadurch gekennzeichnet, dass** die Aus- und Einfahrmittel (21, 22, 23, 24, 31, 41, 42, 43, 45, 46, 47) des Aus-/Einfahr-Teilsystems einen Zylinder (31) aufweisen, der geeignet ist, das Viereck (Q11) in der Ebene (P11) zu verformen, mit:
- zwei feststehenden Gelenken (41, 43), welche ein feststehendes Segment (41-43) definieren, das zu der ersten Achse (X42) senkrecht ist, und
- zwei Gelenken (42, 45), die beweglich sind, wenn der Zylinder (31) betätigt wird, und ein Segment (42-45) definieren, das in einer zu der ersten Achse (X42) senkrechten kreisförmigen Translationsbewegung (E21) beweglich ist.

6. Achssystem nach einem der vorhergehenden Ansprüche, **dadurch gekennzeichnet, dass** die Schwingungsmittel (21, 23, 24, 32, 42, 43, 44, 45, 48, 49) des Schwingungs-Teilsystems einen Zylinder (32) aufweisen, der geeignet ist, das Viereck (Q11) in der Ebene (P11) zu verformen, mit:
- zwei feststehenden Gelenken (41, 43), welche ein feststehendes Segment (41-43) definieren, das zu der ersten Achse (X42) senkrecht ist,
- zwei Gelenken (43, 45), welche ein verformbares Segment (43-45) definieren, dessen Länge (L11) variabel ist, wenn der Zylinder (32) betätigt wird, und
- zwei Gelenken (42, 45), welche ein schwingendes Segment (42-45) definieren, das um die erste Achse (X42) drehbeweglich ist (D15, M15), wenn die Länge des verformbaren Segments (43-45) variiert.

7. Achssystem nach Anspruch 6, **dadurch gekennzeichnet, dass** die Schwingungsmittel (21, 23, 24, 32, 42, 43, 44, 45, 48, 49) umfassen:
- ein erstes, feststehendes Gelenk (43), das an einem ersten Ende (233) eines ersten Armes (23) angeordnet ist,
- ein zweites, bewegliches Gelenk (45), das an einem ersten Ende (245) eines zweiten Armes (24) angeordnet ist,
- ein drittes Gelenk (44), das zwischen einem zweiten Ende (234) des ersten Armes (23) und einem zweiten Ende (244) des zweiten Armes (24) angeordnet ist,
und dadurch, dass der Zylinder (32) zwischen einem vierten Gelenk (48), das an dem ersten Arm (23) angeordnet ist, und einem fünften Gelenk (49), das an dem zweiten Arm (24) angeordnet ist, positioniert ist, derart, dass, wenn der Zylinder (32) betätigt wird, der erste Arm (23) und der zweite Arm (24) relativ zueinander an dem dritten Gelenk (44) schwenken und die Länge (L11) des verformbaren Segments (43-45), das sich zwischen dem ersten und dem zweiten Gelenk (43, 45) befindet, variiert.

8. Achsmodul (8; 9), **dadurch gekennzeichnet, dass** es zwei Achssysteme (11, 12; 13, 14) nach einem der vorhergehenden Ansprüche umfasst, und dadurch, dass die Räder (15, 16; 17, 18) und die Tragarme (21) der jeweiligen Achssysteme (11, 12; 13, 14) in Ebenen, die im Wesentlichen zueinander parallel sind, Ausfahrbewegungen, Einfahrbewegungen und/oder Schwingbewegungen ausführen können.

9. Achsmodul (8; 9) nach Anspruch 8, **dadurch gekennzeichnet, dass** die Räder (15, 16; 17, 18) und die Tragarme (21) der Achssysteme (11, 12; 13, 14) dieses Moduls in ein und derselben Ebene (P11) Ausfahrbewegungen, Einfahrbewegungen und/oder Schwingbewegungen ausführen können.

10. Fahrzeug (1), insbesondere vom Typ einer Hubarbeitsbühne, **dadurch gekennzeichnet, dass** es mindestens ein Fahrgestell (2, 10) und mindestens ein Achsmodul (8, 9) nach einem der Ansprüche 9 oder 10 umfasst, mit insbesondere einem vorderen Modul (9), das im vorderen Bereich des Fahrgestells (2) angeordnet ist, und/oder einem hinteren Modul (8), das im hinteren Bereich des Fahrgestells (2) angeordnet ist.
